# EUROPÄISCHE PATENTSCHRIFT

(11) **EP 1 834 124 B1**
(45) Veröffentlichungstag und Bekanntmachung des Hinweises auf die Patenterteilung: **16.07.2008**
(21) Anmeldenummer: 05803483.6
(22) Anmeldetag: 13.10.2005
(51) Int. Cl.: F16L 37/12, F16L 37/14, F16L 37/084

(54) **KUPPLUNG**
COUPLING
RACCORD

(30) Priorität: 27.12.2004 DE 102004062887
(43) Veröffentlichungstag der Anmeldung: 19.09.2007
(73) Patentinhaber: A. RAYMOND ET CIE, 38000 Grenoble (FR)
(72) Erfinder: FEGER, Axel, 79540 Lörrach (DE); TREDE, Michael, F-68440 Habsheim (FR); RAYMOND, Albert, F-38640 Claix (FR)
(74) Vertreter: Rüttgers, Joachim
(86) Internationale Anmeldenummer: PCT/EP2005/010996
(87) Internationale Veröffentlichungsnummer: WO 2006/074719

(56) Entgegenhaltungen:
- EP-A- 1 369 634
- WO-A-98/28567
- PATENT ABSTRACTS OF JAPAN Bd. 2003, Nr. 12, 5. Dezember 2003 (2003-12-05) & JP 2004 003588 A (TOGO SEISAKUSHO CORP), 8. Januar 2004 (2004-01-08) in der Anmeldung erwähnt

## Beschreibung

Die Erfindung betrifft eine Kupplung gemäß dem Oberbegriff des Patentanspruches 1.

Eine derartige Kupplung ist aus JP 2004003588 A bekannt. Bei dieser vorbekannten Kupplung sind die Sperreelemente des Sicherungsteiles als radial nach innen in den Aufnahmeraum hineinragende Nasen ausgebildet, die an radial nach außen aufbiegbaren Verriegelungsarmen angeformt sind. In der ausgefahrenen Stellung des Sicherungsteiles und mit in dieser Stellung relaxierten Verriegelungsarmen greifen die Nasen in in die Wand des Aufnahmeteiles eingebrachte Nasenausnehmungen ein und blockieren damit eine Bewegung des Sicherungsteiles in die eingeschobene Stellung, sofern nicht der Rückhaltering des Einsteckteiles in einer ordnungsgemäßen Anordnung in dem Aufnahmeteil ist, in der die Nasen nach Aufgleiten des Rückhalteringes an in Einführrichtung ausgebildeten Schrägen der Nasen durch den Rückhaltering so weit radial nach außen gedrückt werden, dass die mit weiteren, in Verschieberichtung ausgebildeten Schrägen an an der Wand des Aufnahmeteiles ausgebildeten Gegenschrägen aufgleiten, so dass das Sicherungsteil in die eingeschobene Stellung überführbar ist.

Als in gewisser Weise nachteilig hat sich bei dieser vorbekannten Kupplung bei häufiger Betätigung eine relativ hohe Empfindlichkeit gegenüber Verschleiß im Bereich der Schrägen sowie eine relativ komplizierte Handhabung beim Überführen des Einsteckteiles von der eingeschobenen Stellung in die ausgefahrene Stellung gezeigt.

Der Erfindung liegt die Aufgabe zugrunde, eine Kupplung der eingangs genannten Art anzugeben, die sich bei einer relativ einfachen konstruktiven Beeinflussung der Montagekraft durch eine hohe Verschleißfestigkeit und eine einfache sowie betriebssichere Handhabung bei Lösen der Verbindung zwischen dem Aufnahmeteil und dem Einsteckteil insbesondere unter beengten Platzverhältnissen auszeichnet.

Diese Aufgabe wird bei einer Kupplung der eingangs genannten Art erfindungsgemäß mit den kennzeichnenden Merkmalen des Patentanspruches 1 gelöst.

Dadurch, dass bei der erfindungsgemäßen Kupplung sich der Eingriff der Sperreelemente in der ausgefahrenen Stellung des Sicherungsteiles bei ordnungsgemäßer Anordnung des Einsteckteiles durch ein verhältnismäßig großflächiges Einwirken des Rückhalteringes mit der Folge einer Bewegung des oder jedes Verriegelungsarmes in axialer Richtung löst und daraufhin das Sicherungsteil mit dem oder jedem Verriegelungsarm in der jeweiligen relativ großzügig dimensionierbaren Verriegelungsarmaufnahme in die eingeschobene Stellung bewegbar und in dieser Stellung das Einsteckteil sichernd arretiert ist, wobei die Arretierung des oder jedes Verriegelungsarmes durch eine einfache, entsprechend gegenläufige Bewegung wieder lösbar ist, ergibt sich eine einfache Beeinflussung der Montagekraft, eine relativ geringe Verschleißanfälligkeit sowie eine auch unter beengten Platzverhältnissen verhältnismäßig einfache und beim Lösen der Verbindung betriebssichere Handhabung.

Weitere zweckmäßige Ausgestaltungen der Erfindung sind Gegenstand der Unteransprüche.

Aus der nachfolgenden Beschreibung eines bevorzugten Ausführungsbeispiels der Erfindung unter Bezug auf die Figuren der Zeichnung ergeben sich weitere zweckmäßige Ausgestaltungen und Vorteile. Es zeigen:
- Fig. 1: in einer perspektivischen Ansicht ein Aufnahmeteil und ein in einer ausgefahrenen Stellung angeordnetes Sicherungsteil eines Ausführungsbeispieles einer erfindungsgemäßen Kupplung,
- Fig. 2: in einer teilgeschnittenen perspektivischen Ansicht das Aufnahmeteil und das Sicherungsteil in der Anordnung gemäß Fig. 1 mit einem in das Aufnahmeteil eingefügten Einsteckteil der erfindungsgemäßen Kupplung,
- Fig. 3: in einer perspektivischen Ansicht das Ausführungsbeispiel gemäß Fig. 1 und Fig. 2 mit dem Sicherungsteil in einer eingeschobenen Stellung, und
- Fig. 4: in einer perspektivischen Ansicht eine Weiterbildung des Ausführungsbeispieles gemäß Fig. 1 bis Fig. 3 in einer ausgefahrenen Stellung des Sicherungsteiles mit einem um das Sicherungsteil gelegten elastischen Sicherungsring.

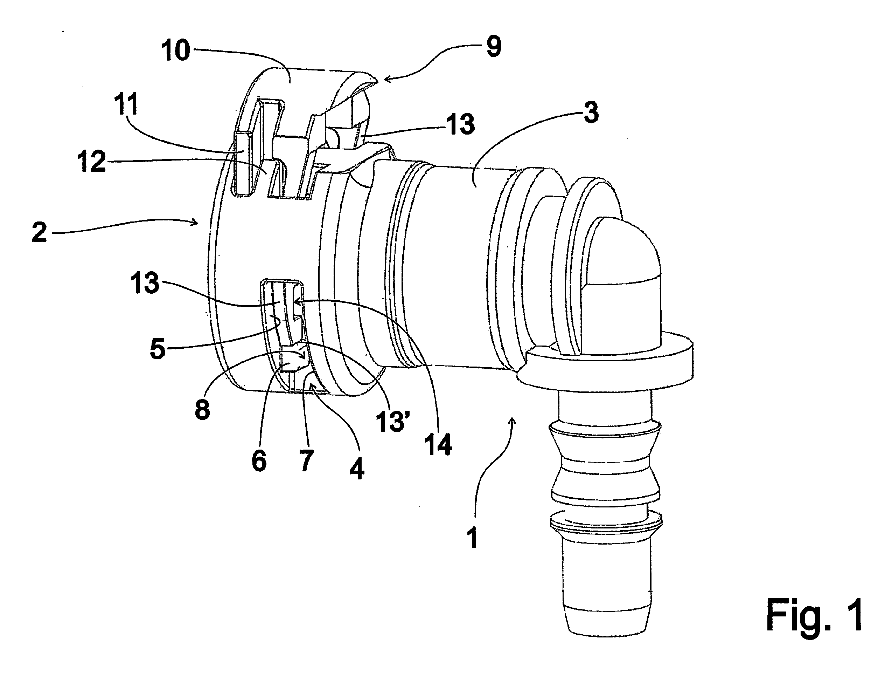

Fig. 1 zeigt in einer teilgeschnittenen perspektivischen Ansicht ein Ausführungsbeispiel einer erfindungsgemäßen Kupplung. Die Kupplung gemäß Fig. 1 verfügt über ein aus einem harten Kunststoffmaterial hergestelltes, abgewinkeltes Aufnahmeteil 1, das mit einem in Fig. 1 nicht dargestellten Ende einer Leitung eines Fluidleitungssystems verbindbar ist. An dem Aufnahmeteil 1 sind in einem einer Einsteckseite 2 benachbarten, im Querschnitt vergrößerten Bereich beidseitig eines länglichen Aufnahmekörpers 3 Verriegelungsarmaufnahmen 4 ausgebildet, die sich rechtwinklig zur axialen Richtung des Aufnahmekörpers 3 erstrecken. An den der Einsteckseite 2 zugewandten Vorderwänden 5 ist als ein Sperrelement jeweils ein Verriegelungsvorsprung 6 angeordnet, der in axialer Richtung von der jeweiligen Vorderwand 5 absteht und sich in Richtung einer der Vorderwand 5 gegenüberliegenden Rückwand 7 erstreckt, wobei zwischen dem von der Einsteckseite 2 wegweisenden freien Ende des jeweiligen Verriegelungsvorsprunges 6 und der betreffenden Rückwand 7 ein Freiraum 8 ausgebildet ist.

Die erfindungsgemäße Kupplung verfügt weiterhin über ein ebenfalls aus einem harten Kunststoffmaterial hergestelltes Sicherungsteil 9, das mit einem Deckabschnitt 10 ausgebildet ist, an dem zwei einander gegenüberliegende Rückhaltearme 11 angeformt sind. Die Rückhaltearme 11 greifen jeweils in eine durch eine Zwischenwand 12 von den Verriegelungsarmaufnahmen 4 abgetrennten und auf der der Einsteckseite 2 zugewandten Seite der Verriegelungsarmaufnahmen 4 angeordneten Rückhaltearmaufnahmen ein.

Weiterhin verfügt das Sicherungsteil 9 bei dem dargestellten Ausführungsbeispiel über zwei Verriegelungsarme 13, die in die Verriegelungsarmaufnahmen 4 eingreifen und aufgrund der Eigenschaften des verwendeten Kunststoffmateriales und/oder einer entsprechenden Dimensionierung in den Abmessungen in der axialen Richtung biegsam sind. Vorzugsweise sind die Verriegelungsarme 13 zu der Einsteckseite 2 vorgespannt und liegen in der Darstellung gemäß Fig. 1 daher wenigstens im Bereich ihrer freien Enden 13' mit ihren der Einsteckseite 2 zugewandten Flachseiten an den Vorderwänden 5 der Verriegelungsarmaufnahmen 4 an.

In der Anordnung des Aufnahmeteiles 1 und des Sicherungsteiles 9 gemäß Fig. 1, in der das Sicherungsteil 9 in einer ausgefahrenen Stellung ist, liegen die als weitere Sperrelemente der Sperranordnung wirkenden Stirnseiten 13' der freien Enden der Verriegelungsarme 13 an den ihnen zugewandten Wandseiten der Verriegelungsvorsprünge 6 an, wobei das Sicherungsteil 9 durch die bevorzugte Vorspannung der Verriegelungsarme 13 in Richtung der Einsteckseite 2 somit in dieser Stellung gegen ein Verschieben in eine eingeschobene Stellung gesichert ist.

Weiterhin lässt sich in Fig. 1 erkennen, dass im Bereich des freien Endes der Verriegelungsarme 13 jeweils eine radial nach innen geöffnete Verriegelungsausnehmung 14 ausgebildet ist, deren Gestalt komplementär zu der Form des jeweiligen Verriegelungsvorsprunges 6 ist.

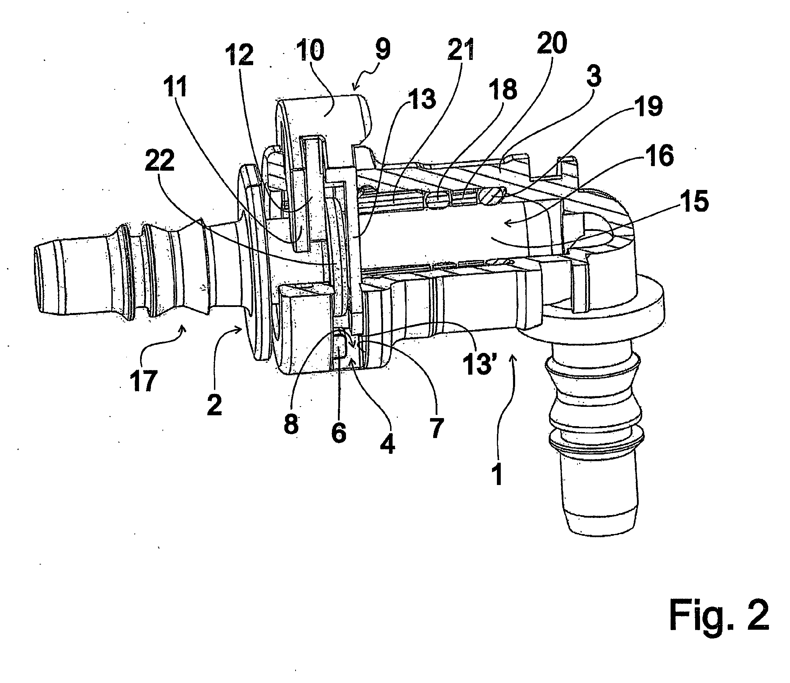

Fig. 2 zeigt in einer teilgeschnittenen perspektivischen Ansicht das Aufnahmeteil 1 und das Sicherungsteil 9 des erläuterten Ausführungsbeispieles einer erfindungsgemäßen Kupplung in der Anordnung gemäß Fig. 1 mit einem mit einem Einsteckschaft 15 in einen von dem Aufnahmekörper 3 umschlossenen Aufnahmeraum 16 eingefügten Einsteckteil 17. Der Einsteckschaft 15 ist über eine Dichtanordnung mit zwei elastischen Dichtringen 18, 19, die durch einen zwischen ihnen angeordneten harten Zwischenring 20 sowie einem innenliegenden fixierten Distanzring 21 in Position gehalten sind, abgedichtet. Das Einsteckteil 17 ist weiterhin mit einem gegenüber dem Einsteckschaft 15 im Durchmesser vergrößerten Rückhaltering 22 sowie zum Anschluss an das Fluidleitungssystem mit einem auf der dem Einsteckschaft 15 gegenüberliegenden Seite des Rückhalteringes 22 ausgebildeten Verbindungsschaft ausgebildet.

In der Anordnung gemäß Fig. 2 ist das Einsteckteil 17 für eine korrekte Verbindung mit dem Aufnahmeteil 1 ordnungsgemäß ausreichend tief in den Aufnahmeraum 16 eingefügt, wobei erst in dieser Anordnung der ein Überführen des Sicherungsteiles 9 von der ausgefahrenen Stellung in die eingeschobene Stellung behindernde Eingriff der Stirnseiten 13' der freien Enden der Verriegelungsarme 13 mit den Verriegelungsvorsprüngen 6 unter Bewegen der Verriegelungsarme 13 entgegen der Vorspannung in axialer Richtung von der Einsteckseite 2 weg gelöst ist.

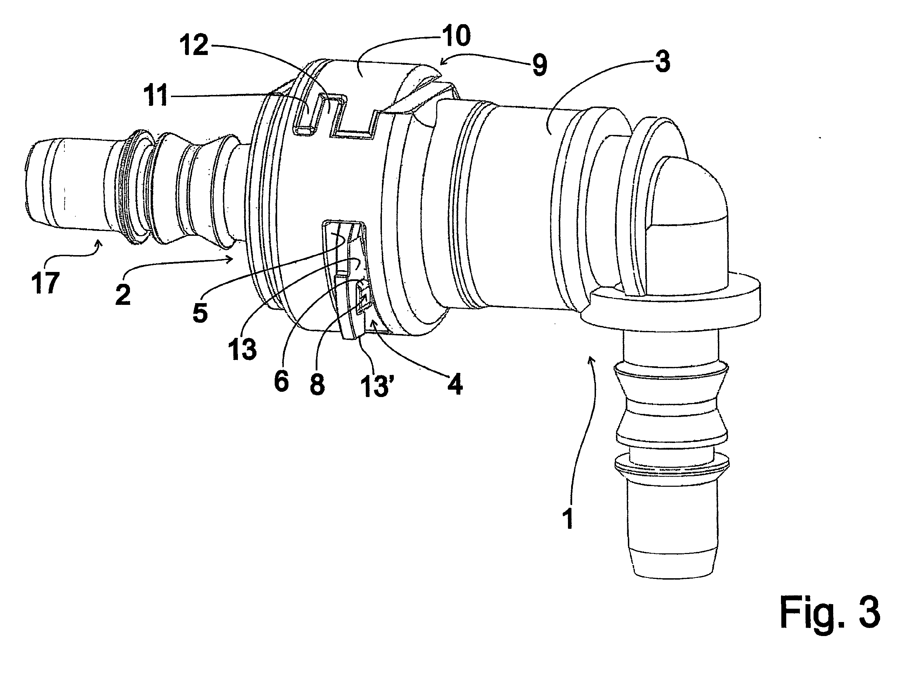

Fig. 3 zeigt in einer perspektivischen Ansicht das Ausführungsbeispiel gemäß Fig. 1 und Fig. 2 mit dem Sicherungsteil 9 in einer eingeschobenen Stellung. Die eingeschobene Stellung wurde ausgehend von der in Fig. 2 dargestellten Anordnung eingenommen, indem sich durch Ausüben einer entsprechenden Kraft auf den Deckabschnitt 10 die Verriegelungsarme 13 durch die Freiräume 8 hindurch so weit bewegt haben, bis aufgrund der Vorspannung der Verriegelungsarme 13 die Verriegelungsausnehmungen 14 mit den Verriegelungsvorsprüngen 6 in Eingriff gekommen sind und das Sicherungsteil 9 in dieser eingeschobenen Stellung fixieren. In der eingeschobenen Stellung hintergreifen die Rückhaltearme 11 den Rückhaltering 22 und sichern somit das Einsteckteil 17 in dem Aufnahmeteil 1. Zum Vermeiden eines zu großen Spieles bei dieser Bewegung sind die Freiräume 8 zweckmäßigerweise in ihren Abmessungen in axialer Richtung nur geringfügig größer als die Dicke der Verriegelungsarme 13 ausgebildet.

Aus Fig. 3 lässt sich weiterhin entnehmen, dass die freien Enden der Verriegelungsarme 13 geringfügig über den gegenüber dem Aufnahmekörper 3 im Durchmesser vergrößerten Bereich des Aufnahmeteiles 1 überstehen, so dass bei Ausüben einer Kraft auf die überstehenden Endabschnitte der Verriegelungsarme 13 in axialer Richtung von der Einsteckseite 2 weg entgegen der Vorspannung der Verriegelungsarme 13 der Eingriff zwischen den Verriegelungsvorsprüngen 6 und den Verriegelungsausnehmung 14 gelöst wird und durch Ausüben einer zu dieser Entriegelungskraft rechtwinklig ausgerichteten weiteren Kraft in Richtung des Deckabschnittes 10 das Sicherungsteil 9 von der eingeschobene Stellung in die ausgefahrene Stellung überführbar ist, in der das Einsteckteil 17 wieder aus dem Aufnahmeteil 1 herausziehbar ist.

Durch dieses Erfordernis einer zweifachen, in ihrer zeitlichen Abfolge separierten Kraftausübung in verschiedenen Richtungen ist eine sehr betriebssichere Verbindung zwischen dem Aufnahmeteil 1 und dem Einsteckteil 17 geschaffen, bei der ein unabsichtliches Lösen so gut wie ausgeschlossen ist.

Falls hingegen das Sicherungsteil 9 aus der Anordnung gemäß Fig. 2 nicht in die eingeschobene Stellung gemäß Fig. 3 überführt wird, erfolgt durch die nunmehr relativ hohe Vorspannung der Verriegelungsarme 13 ein Austreiben des Einsteckteiles 17 entgegen der Einführrichtung in Richtung der Einsteckseite 2. Dadurch ist eine hohe Montagesicherheit gegeben.

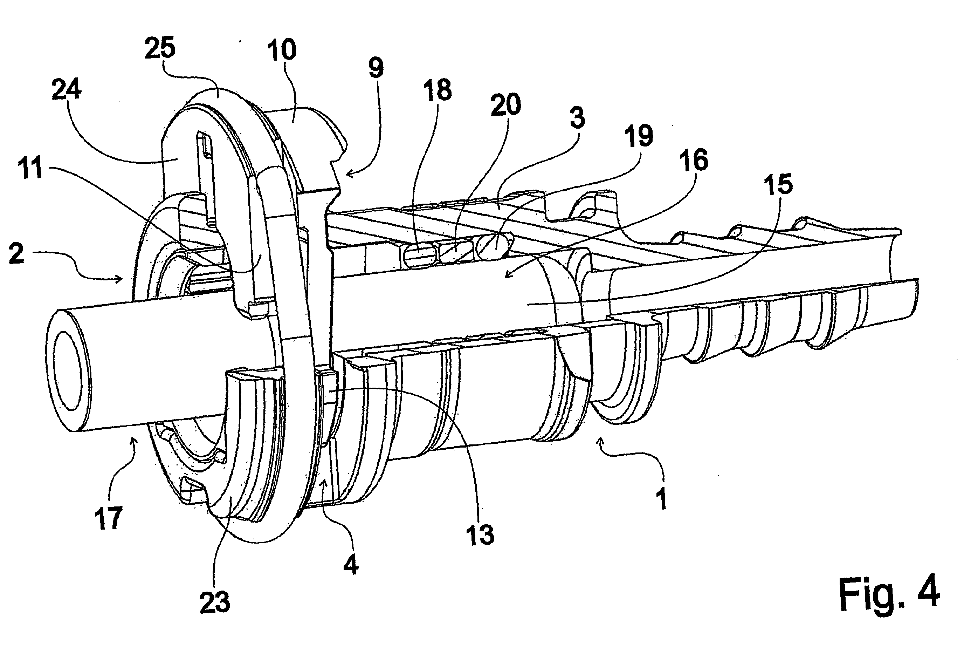

Fig. 4 zeigt in einer perspektivischen Ansicht eine Weiterbildung des Ausführungsbeispieles gemäß Fig. 1 bis Fig. 3 in einer ausgefahrenen Stellung des Sicherungsteiles 9, wobei das Aufnahmeteil 1 gerade ausgebildet ist. Soweit in der Darstellung gemäß Fig. 4 sichtbar sind sich bei dem Ausführungsbeispiel gemäß Fig. 1 bis Fig. 3 sowie der Weiterbildung gemäß Fig. 4 entsprechende Elemente mit den gleichen Bezugszeichen versehen und im weiteren nicht näher erläutert.

Bei der Weiterbildung gemäß Fig. 4 ist das Aufnahmeteil 1 an der Einsteckseite 2 mit einem radial verdickten Abschlussbund 23 ausgebildet, während das Sicherungsteil 9 an seiner der Einsteckseite 2 zugewandten Seite mit einem Aufnahmefortsatz 24 ausgestattet ist. Sowohl der Abschlussbund 23 als auch der Aufnahmefortsatz 24 sind mit einer sich umfänglich erstreckenden Vertiefung ausgebildet, in der als Vorspannmittel ein elastischer Sicherungsring 25 in Gestalt eines O-Ringes eingelegt ist.

In der Anordnung gemäß Fig. 4 ist das Sicherungsteil 9 durch den Sicherungsring 25 somit vorgespannt, so dass sich bei ordnungsgemäß in das Aufnahmeteil 1 eingefügtem Einsteckteil 17 das Sicherungsteil 9 selbsttätig in die eingeschobene Stellung bewegt.

## Patentansprüche

1. Kupplung mit einem Aufnahmeteil (1) zum Aufnehmen eines mit einem Rückhaltering (22) ausgebildeten Einsteckteiles (17) und mit einem Sicherungsteil (9), das wenigstens einen in einer Verriegelungsarmaufnahme (4) angeordneten Verriegelungsarm (13) und wenigstens einen Rückhaltearm (11) aufweist, wobei das Sicherungsteil (9) in einen länglichen Aufnahmeraum (16) des Aufnahmeteiles (1) einfügbar und rechtwinklig zu einer Einsteckrichtung des Einsteckteiles (17) zwischen einer ausgefahrenen Stellung und einer eingeschobenen Stellung bewegbar ist, wobei das Aufnahmeteil (1) und das Sicherungsteil eine Sperranordnung mit Sperreelementen (6, 13') aufweisen, die bei nicht ordnungsgemäß in das Aufnahmeteil (1) eingefügtem Einsteckteil (17) derart in Eingriff miteinander sind, dass das Sicherungsteil (9) ausgehend von der ausgefahrenen Stellung am Überführen in die eingeschobene Stellung behindert ist, und wobei der oder jeder Verriegelungsarm (13) so ausgebildet ist, dass bei Anordnen des Rückhalteringes (22) im Bereich des oder jedes Verriegelungsarmes (13) der Eingriff zwischen den Sperreelementen (6) gelöst und das Sicherungsteil (9) unter Hintergreifen des Rückhalteringes (22) durch den oder jeden Rückhaltearm (11) in die eingeschobene Stellung bewegbar ist, **dadurch gekennzeichnet, dass** der oder jeder Verriegelungsarm (13) in axialer Richtung biegsam ist, dass die Abmessung der oder jeder Verriegelungsarmaufnahme (4) in axialer Richtung größer als die Dicke des betreffenden Verriegelungsarmes (13) ist und dass die Sperranordnung einen in axialer Richtung ausgerichteten Verriegelungsvorsprung (6) aufweist, der in der ausgefahrenen Stellung des Sicherungsteiles (9) bei nicht ordnungsgemäß in das Aufnahmeteil (1) eingefügtem Einsteckteil (17) die Bewegung des Sicherungsteiles (9) in die eingeschobene Stellung behindert.

2. Kupplung nach Anspruch 1, **dadurch gekennzeichnet, dass** der oder jeder Verriegelungsvorsprung (6) an einer in Einführrichtung des Einsteckteiles (17) vorderseitig gelegenen Vorderwand (5) der Verriegelungsarmaufnahme (4) angeformt ist.

3. Kupplung nach Anspruch 1 oder Anspruch 2, **dadurch gekennzeichnet, dass** ein Freiraum (8) zwischen dem vorderen freien Ende des oder jedes Verriegelungvorsprunges (6) und einer Wand (7) der Verriegelungsarmaufnahme (4) im wesentlichen der Dicke des zugeordneten Verriegelungsarmes (13) entspricht.

4. Kupplung nach einem der Ansprüche 1 bis 3, **dadurch gekennzeichnet, dass** wenigstens eine Verriegelungsausnehmung (14) ausgebildet ist, die in der eingeschobenen Stellung des Sicherungsteiles (9) mit dem ihr zugeordneten Verriegelungsvorsprung (6) in Eingriff kommt.

5. Kupplung nach einem der Ansprüche 1 bis 4, **dadurch gekennzeichnet, dass** ein auf das Sicherungsteil (9) einwirkendes Vorspannmittel (25) vorhanden ist, mit dem das Sicherungsteil (9) bei ordnungsgemäß in das Aufnahmeteil (1) eingefügtem Einsteckteil (17) von der ausgefahrenen Stellung in die eingeschobene Stellung bewegbar ist.

## Claims

1. Coupling comprising a receiving part (1) for receiving an inserted part (17) formed with a retaining ring (22) and comprising a securing part (9) which has at least one locking arm (13) arranged in a locking arm receptacle (4) and at least one retaining arm (11), the securing part (9) being insertable into an elongated receptacle space (16) of the receiving part (1) and being moveable at right angles to an insertion direction of the inserted part (17) between a withdrawn position and a pushed-in position, the receiving part (1) and the securing part having a blocking arrangement with blocking elements (6, 13') which, if the inserted part (17) is not properly introduced into the receiving part (1), engage one another in such a way that the securing part (9), starting from the withdrawn position, is prevented from transferring into the pushed-in position, and the or each locking arm (13) being formed in such a way that, when the retaining ring (22) is arranged in the region of the or each locking arm (13), the engagement between the blocking elements (6) is released and the securing part (9) can be moved into the pushed-in position by the or each retaining arm (11), said securing part gripping behind the retaining ring (22), **characterized in that** the or each locking arm (13) is flexible in the axial direction, **in that** the dimension of the or each locking arm receptacle (4) in the axial direction is greater than the thickness of the relevant locking arm (13), and **in that** the locking arrangement has a locking projection (6) which is aligned in the axial direction and, when the securing part (9) is in the withdrawn position, hinders the movement of the securing part (9) into the pushed-in position if the inserted part (17) is not properly introduced into the receiving part (1).

2. Coupling according to Claim 1, **characterized in that** the or each locking projection (6) is formed on a front wall (5) of the locking arm receptacle (4), which front wall is located at the front in the direction of introduction of the inserted part (17).

3. Coupling according to Claim 1 or Claim 2, **characterized in that** a free space (8) between the front free end of the or each locking projection (6) and a wall (7) of the locking arm receptacle (4) substantially corresponds to the thickness of the coordinated locking arm (13).

4. Coupling according to any of Claims 1 to 3, **characterized in that** at least one locking recess (14) is formed, which, when the securing part (9) is in the pushed-in position, engages the locking projection (6) coordinated with it.

5. Coupling according to any of Claims 1 to 4, **characterized in that** a prestressing means (25) which acts on the securing part (9) and by means of which the securing part (9) can be moved from the withdrawn position into the pushed-in position if the inserted part (17) is properly introduced into the receiving part (1) is present.

## Revendications

1. Organe d'accouplement se composant d'un élément formant logement d'emmanchement (1) dans lequel vient s'insérer un embout embrochable mâle (17) muni d'une bague de retenue (22), et d'un élément de blocage en position (9), qui comprend au moins un segment de verrouillage (13) disposé dans un logement de verrouillage (4) et au moins un segment de retenue (11), l'élément de blocage en position (9) étant en l'occurrence destiné à être inséré dans le gabarit de réception de forme allongée (16) de l'élément formant logement d'emmanchement (1) et susceptible d'être déplacé selon une trajectoire en angle droit par rapport au sens de l'emmanchement de l'embout embrochable mâle (17) entre une position de dégagement et une position d'insertion en prise, l'élément formant logement d'emmanchement (1) et l'élément de blocage en position étant en l'occurrence munis d'un dispositif d'arrêt comportant des organes d'arrêt (6, 13') qui, si l'embout embrochable mâle (17) n'est pas emmanché dans les conditions qui s'imposent dans l'élément formant logement d'emmanchement (1), sont en prise d'engagement réciproque dans des conditions telles qu'il n'est pas possible de déplacer l'élément de blocage en position (9) de sa position de dégagement dans sa position d'insertion en prise, et le ou chaque segment de verrouillage (13) ayant en l'occurrence une configuration telle que lorsque la bague de retenue (22) est disposée dans la zone correspondant au ou à chaque segment de verrouillage (13), les organes d'arrêt (6) se dégagent de leur emprise d'encastrement réciproque et l'élément de blocage en position (9) peut être amené dans sa position d'insertion en prise, avec un effet de cramponnement par derrière au niveau de la bague de retenue (22), par le ou chaque segment de retenue (11), **caractérisé en ce que** le ou chaque segment de verrouillage (13) est capable de céder par flexion élastique dans le plan axial, **en ce que** la dimension du ou de chaque logement de verrouillage (4) est supérieure à l'épaisseur du segment de verrouillage (13) correspondant, et **en ce que** le dispositif d'arrêt comporte une saillie de verrouillage (6) orientée dans le plan axial qui, si l'embout embrochable mâle (17) n'est pas emmanché dans les conditions qui s'imposent dans l'élément formant logement d'emmanchement (1), empêche l'élément de blocage en position (9) de venir se placer dans sa position d'insertion en prise.

2. Organe d'accouplement selon la revendication 1, **caractérisé en ce que** la ou chaque saillie de verrouillage (6) est réalisée solidaire par moulage de la paroi antérieure (5) du logement de verrouillage (4) se situant sur la face antérieure dans le sens de l'emmanchement de l'élément embrochable mâle (17).

3. Organe d'accouplement selon la revendication 1 ou la revendication 2, **caractérisé en ce que** l'espace vide (8) existant entre l'extrémité antérieure libre de la ou de chaque saillie de verrouillage (6) et la paroi (7) du logement de verrouillage (4) correspond sensiblement à l'épaisseur du segment de verrouillage (13) qui lui est associé.

4. Organe d'accouplement selon l'une des revendications 1 à 3, **caractérisé en ce qu'**il comporte un évidement de verrouillage (14) qui, lorsque l'élément de blocage en position (9) est dans sa position d'insertion en prise, vient en prise d'encastrement avec la saillie de verrouillage (6) qui lui est associée.

5. Organe d'accouplement selon l'une des revendications 1 à 4, **caractérisé en ce qu'**il est prévu un moyen de mise en état de précontrainte agissant sur l'élément de blocage en position (9), à l'aide duquel l'élément de blocage en position (9) peut, lorsque l'embout embrochable mâle (17) est emmanché dans les conditions qui s'imposent dans l'élément formant logement d'emmanchement (1), être amené de sa position de dégagement dans sa position d'insertion en prise.
